# EUROPÄISCHE PATENTSCHRIFT

(11) **EP 3 207 337 B1**
(45) Veröffentlichungstag und Bekanntmachung des Hinweises auf die Patenterteilung: **20.06.2018**
(21) Anmeldenummer: 15756585.4
(22) Anmeldetag: 17.08.2015
(51) Int. Cl.: G01D 5/14, G01P 3/487, G01D 5/249

(54) **SENSOR ZUR BESTIMMUNG MINDESTENS EINER ROTATIONSEIGENSCHAFT EINES ROTIERENDEN ELEMENTS**
SENSOR FOR DETERMINING AT LEAST ONE ROTATION CHARACTERISTIC OF A ROTATING ELEMENT
CAPTEUR POUR DÉTERMINER AU MOINS UNE PROPRIÉTÉ DE ROTATION D'UN ÉLÉMENT EN ROTATION

(30) Priorität: 14.10.2014 DE 102014220783
(43) Veröffentlichungstag der Anmeldung: 23.08.2017
(73) Patentinhaber: Robert Bosch GmbH, 70442 Stuttgart (DE)
(72) Erfinder: SCHAEFER, Holger, 99438 Bad Berka (DE)
(86) Internationale Anmeldenummer: PCT/EP2015/068820
(87) Internationale Veröffentlichungsnummer: WO 2016/058731

(56) Entgegenhaltungen:
- DE-A1- 19 928 557
- DE-C1- 19 701 927
- US-A1- 2012 229 126

## Beschreibung

### Stand der Technik

Aus dem Stand der Technik sind zahlreiche Sensoren bekannt, welche mindestens eine Rotationseigenschaft rotierender Elemente erfassen. Unter Rotationseigenschaften sind dabei allgemein Eigenschaften zu verstehen, welche die Rotation des rotierenden Elements zumindest teilweise beschreiben. Hierbei kann es sich beispielsweise um Winkelgeschwindigkeiten, Drehzahlen, Winkelbeschleunigungen, Drehwinkel, Winkelstellung oder andere Eigenschaften handeln, welche eine kontinuierliche oder diskontinuierliche, gleichförmige oder ungleichförmige Rotation oder Drehung des rotierenden Elements charakterisieren können. Beispiele derartiger Sensoren sind in Konrad Reif (Hrsg.): Sensoren im Kraftfahrzeug, 1. Auflage, 2010, Seiten 63-73 und 120-129 beschrieben.

Die DE 10 2012 221 327 A1 beschreibt einen Drehzahlsensor, der wenigstens einen Magnetsensor aufweist, um in mindestens einem ersten Drehzahlbereich eines rotierenden Elements eine Erfassung der von magnetischen Ergebnisgebern einer ersten Lesespur erzeugten Ereignisse zu ermöglichen und in mindestens einem von einem ersten Drehzahlbereich verschiedenen zweiten Drehzahlbereich eine Erfassung der von magnetischen Ereignisgebern einer zweiten Lesespur erzeugten magnetischen Ereignisse zu ermöglichen, wobei eine Anzahl der magnetischen Ereignisgeber der zweiten Lesespur eine Anzahl der magnetischen Ereignisgeber der ersten Lesespur um mindestens einen Faktor 1,4 übersteigt.

Ein besonderer Schwerpunkt der vorliegenden Erfindung, auf welche die Erfindung jedoch grundsätzlich nicht beschränkt ist, liegt in der Erfassung einer Absolutwinkelposition einer Nockenwelle. Nockenwellensensoren werden üblicherweise zur Synchronisation zwischen Nockenwelle und Kurbelwelle bei einem Motorstart genutzt. Kurbelwelle und Nockenwelle sind jeweils mit einem Geberrad ausgestattet. Für die Nockenwelle wird im Normalfall für jeden Zylinder ein Zahn-Lücke-Paar auf dem Geberrad verwendet. Entsprechend weist ein Vierzylindermotor auf der Nockenwelle ein Geberrad mit vier Zahn-Lücke-Paaren auf. Für die Messung werden Sensoren benutzt, die auf dem Hall-Effekt oder einem XMR-Prinzip (X-MagnetoResistiv) basieren. Typischerweise wird in diesen Sensoren ein Permanentmagnet verbaut, dessen magnetisches Feld durch das rotierende Geberrad moduliert wird. Dieses modulierte Magnetfeld kann mit Hilfe der genannten Prinzipien erfasst werden und damit in ein verwertbares Signal umgewandelt werden. Der Nockenwellensensor dient zur groben Detektion des Motortaktes bzw. der Bestimmung, in welchem Motortakt sich der Motor befindet, d. h. der Zylinderposition. Die Sensoren können eine Funktion zum eindeutigen Erkennen eines Zahns oder einer Lücke aufweisen. Ebenfalls können die Sensoren eine Funktion aufweisen, bei der der Sensor zur Laufrichtung des Geberrads verdreht werden kann, ohne dass das Sensorsignal abbricht. Alle Sensoren detektieren dabei die Zahnkanten der Geberradzähne.

Trotz der durch diese Sensoren bewirkten Verbesserungen besteht nach wie vor ein Verbesserungspotenzial. So erfordern die dynamisch verstellbaren Nockenwellenpositionen der neuesten Motorgenerationen eine hochauflösende Erfassung der Nockenwellenposition. Außerdem ist es erforderlich, diese Nockenwellenposition als einen Absolutwinkel zu erfassen. Die bisherigen Sensoren sind nicht in der Lage diese Anforderungen zu erfüllen. Ein Absolutwinkel kann nur im dynamischen Fall, d. h. bei einem rotierenden Geberrad, und nur grob aufgrund der Zahn-Lücke-Kombination vom Motorsteuergerät errechnet werden. Das Sensorsignal allein kann keinen Absolutwinkel liefern. Ebenfalls ist die Auflösung durch die geringen Durchmesser der verwendeten Geberräder limitiert. Durch diese geringen Durchmesser ergeben sich minimale Lückengrößen, die eingehalten werden müssen.

Die DE 197 01 927 C1 zeigt einen Drehzahlsensor, der ein symmetrisches Magnetfeld aufweisendes Signalerzeugungselement, beispielsweise einen Ringmagneten mit einem magnetischen Nordpol und einem magnetischen Südpol, und ein Sensorelement mit einer sensitiven Fläche, das das Magnetfeld des Signalerzeugungselements erfasst, umfasst.

Die US 2012 0229126 zeigt einen Drehzahlsensor mit einem Signalerzeugungselement mit mehreren magnetischen Nordpolen und mehreren magnetischen Südpolen, wobei ein von dem Signalerzeugungselement erzeugtes sich änderndes Magnetfeld von mehreren Sensorelementen erfasst wird.

Auch die DE 199 28 557 A1 zeigt einen Drehzahlsensor, bei dem das von einem Signalerzeugungselement erzeugte Magnetfeld an zwei Positionen bestimmt wird und daraus ein Positionssignal ermittelt wird.

Ein besonderer Schwerpunkt der vorliegenden Erfindung, auf welche die Erfindung jedoch grundsätzlich nicht beschränkt ist, liegt in der Erfassung einer Absolutwinkelposition einer Nockenwelle. Nockenwellensensoren werden üblicherweise zur Synchronisation zwischen Nockenwelle und Kurbelwelle bei einem Motorstart genutzt. Kurbelwelle und Nockenwelle sind jeweils mit einem Geberrad ausgestattet. Für die Nockenwelle wird im Normalfall für jeden Zylinder ein Zahn-Lücke-Paar auf dem Geberrad verwendet. Entsprechend weist ein Vierzylindermotor auf der Nockenwelle ein Geberrad mit vier Zahn-Lücke-Paaren auf. Für die Messung werden Sensoren benutzt, die auf dem Hall-Effekt oder einem XMR-Prinzip (X-MagnetoResistiv) basieren. Typischerweise wird in diesen Sensoren ein Permanentmagnet verbaut, dessen magnetisches Feld durch das rotierende Geberrad moduliert wird. Dieses modulierte Magnetfeld kann mit Hilfe der genannten Prinzipien erfasst werden und damit in ein verwertbares Signal umgewandelt werden. Der Nockenwellensensor dient zur groben Detektion des Motortaktes bzw. der Bestimmung, in welchem Motortakt sich der Motor befindet, d. h. der Zylinderposition. Die Sensoren können eine Funktion zum eindeutigen Erkennen eines Zahns oder einer Lücke aufweisen. Ebenfalls können die Sensoren eine Funktion aufweisen, bei der der Sensor zur Laufrichtung des Geberrads verdreht werden kann, ohne dass das Sensorsignal abbricht. Alle Sensoren detektieren dabei die Zahnkanten der Geberradzähne.

Trotz der durch diese Sensoren bewirkten Verbesserungen besteht nach wie vor ein Verbesserungspotenzial. So erfordern die dynamisch verstellbaren Nockenwellenpositionen der neuesten Motorgenerationen eine hochauflösende Erfassung der Nockenwellenposition. Außerdem ist es erforderlich, diese Nockenwellenposition als einen Absolutwinkel zu erfassen. Die bisherigen Sensoren sind nicht in der Lage diese Anforderungen zu erfüllen. Ein Absolutwinkel kann nur im dynamischen Fall, d. h. bei einem rotierenden Geberrad, und nur grob aufgrund der Zahn-Lücke-Kombination vom Motorsteuergerät errechnet werden. Das Sensorsignal allein kann keinen Absolutwinkel liefern. Ebenfalls ist die Auflösung durch die geringen Durchmesser der verwendeten Geberräder limitiert. Durch diese geringen Durchmesser ergeben sich minimale Lückengrößen, die eingehalten werden müssen.

### Offenbarung der Erfindung

Es wird daher ein Sensor zur Bestimmung wenigstens einer Rotationseigenschaft eines rotierenden Elements vorgeschlagen, welcher die Nachteile bekannter Sensoren zumindest weitgehend vermeiden kann und der insbesondere in der Lage ist, Rotationseigenschaften rotierender Elemente hochauflösend zu erfassen und insbesondere einen Absolutwinkel einer Nockenwelle hochauflösend zu erfassen.

Der Sensor zur Bestimmung mindestens einer Rotationseigenschaft eines rotierenden Elements gemäß der vorliegenden Erfindung umfasst ein mit dem rotierenden Element verbindbares Geberrad mit mindestens einer ersten und einer zweiten Lesespur, wie definiert im Anspruch 1. Es wird entsprechend ein Sensor vorgeschlagen, dessen Geberrad über einen vollständigen Umfang, d. h. 360°, mit einer ersten und einer zweiten Lesespur versehen ist. Die erste Lesespur weist eine erste Mehrzahl von magnetischen Ereignisgebern auf. Hierunter wird allgemein verstanden, dass das Geberrad mit der ersten Mehrzahl an magnetischen Ereignisgebern je nach Ausgestaltung in der Lage ist, mit jedem einzelnen Ereignisgeber im Bereich des Sensors ein Magnetfeld zu erzeugen oder ein in diesem Bereich bestehendes Magnetfeld zu verändern bzw. zu beeinflussen.

Unter einem magnetischen Ereignis wird somit jegliche Beeinflussung oder Änderung eines magnetischen Feldes im Bereich des Sensors verstanden. Ein von dem Sensor erfasstes magnetisches Ereigniss kann als Grundlage zur Ermittlung des Absolutwinkels dienen. Dies wird insbesondere dadurch erreicht, dass sich die magnetische Feldstärke der ersten Mehrzahl von Ereignisgebern schrittweise von einem ersten maximalen Nordpol zu einem ersten maximalen Südpol über den Umfang des Geberrads ändert. Mit anderen Worten weist die erste Lesespur auf dem Geberrad genau einen maximalen Nordpol und einen maximalen Südpol auf. Zwischen diesen wird die magnetische Feldstärke der ersten Mehrzahl von Ereignisgebern schrittweise geändert. Genauer wird von einem maximalen Nordpol Schritt für Schritt die Feldstärke gesenkt. Bei beispielsweise 0 mT folgt ein Wechsel auf Südpol. Jetzt wird wiederum die Feldstärke Schritt für Schritt angehoben bis zu einem maximalen Südpol. Entsprechend liegen maximaler Südpol und maximaler Nordpol nebeneinander.

Die erste Lesespur kann so ausgebildet sein, dass sich über den vollständigen Umfang des Geberrads die magnetische Feldstärke der Ereignisgeber kontinuierlich von dem ersten maximalen Nordpol zu dem ersten maximalen Südpol ändert. Mit anderen Worten wird die schrittweise Änderung der Feldstärke derart vorgenommen, dass die einzelnen Schritte infinitesimal klein gewählt sind.

Das Geberrad weist weiterhin eine zweite Lesespur auf. Die zweite Lesespur weist eine zweite Mehrzahl von magnetischen Ereignisgebern auf. Die zweite Lesespur ist so ausgebildet, dass sich über einen vollständigen Umfang des Geberrads eine magnetische Feldstärke der zweiten Mehrzahl von Ereignisgebern schrittweise von einem zweiten maximalen Nordpol zu einem zweiten maximalen Südpol ändert. Die magnetische Feldstärke der ersten Mehrzahl von Ereignisgebern kann sich in einer ersten Richtung ändern. Die magnetische Feldstärke der zweiten Mehrzahl von Ereignisgebern kann sich in einer zweiten Richtung ändern. Die zweite Richtung kann der ersten Richtung entgegengesetzt sein. Der Sensor kann weiterhin einen zweiten Magnetsensor zur Erfassung von durch die zweite Mehrzahl von magnetischen Ereignisgebern erzeugten magnetischen Ereignissen umfassen. Der erste Magnetsensor kann zum Ausgeben eines ersten Signals ausgebildet sein. Der zweite Magnetsensor kann zum Ausgeben eines zweiten Signals ausgebildet sein. Zur Bestimmung der Rotationseigenschaft des rotierenden Elements kann ein Differenzsignal aus dem ersten Signal und dem zweiten Signal verwendbar sein. Aus dem ersten Signal oder dem Differenzsignal kann ein pulsweitenmoduliertes Signal erzeugbar sein. Das Geberrad kann weiterhin eine dritte Lesespur aufweisen. Die dritte Lesespur kann eine dritte Mehrzahl von magnetischen Ereignisgebern aufweisen. Die dritte Lesespur kann so ausgebildet sein, dass die dritte Mehrzahl von Ereignisgebern mehrere Nordpole und mehrere Südpole aufweist, die über den vollständigen Umfang des Geberrads alternierend angeordnet sind. Mit anderen Worten sind die mehreren Nordpole und die mehreren Südpole jeweils als eine Vielzahl von Paaren über den Umfang des Geberrads verteilt angeordnet. Der Sensor kann weiterhin einen dritten Magnetsensor zur Erfassung von durch die dritte Mehrzahl von magnetischen Ereignisgebern erzeugten magnetischen Ereignissen aufweisen. Als Magnetsensor können insbesondere Hall-Sensoren verwendet werden, d. h. Sensoren mit einem Hall-Element, wie beispielsweise einer Hall-Platte. Entsprechend der vorliegenden Erfindung kann der Sensor insbesondere einen Absolutwinkel einer Nockenwelle erfassen, sofern das das rotierende Element eine Nockenwelle ist.

Mit der vorliegenden Erfindung kann der Absolutwinkel einer Nockenwelle kontaktlos gemessen werden. Dabei ermöglicht die Erfindung die Messung des Absolutwinkels mit variabel einstellbarer Auflösung.

Um die Messung eines Absolutwinkels zu ermöglichen, wird ein Multipolgeberrad verwendet. Auf diesem sind ein bis drei Lesespuren aufmagnetisiert. Für die Absolutwinkelerkennung muss auf mindestens einer Lesespur folgende Magnetisierung aufgebracht werden: Über die vollen 360° des Geberrades gibt es nur zwei Wechsel von Nord- nach Südpol. 100 % bzw. -100% entsprechen dem maximalen Nord- bzw. Südpol. Das heißt, es wird von einem maximalen Nordpol Schritt für Schritt die Feldstärke gesenkt. Bei ca. 0 mT erfolgt der Wechsel auf Südpol. Jetzt wird wiederum die Feldstarke Schritt für Schritt angehoben bis zu einem maximalen Südpol. Dementsprechend liegen maximaler Südpol und maximaler Nordpol nebeneinander. Dieses "Ummagnetisieren" kann "kontinuierlich" oder quantisiert erfolgen. Eine kontinuierliche Ummagnetisierung hat dabei mehrere Nachteile, aber auch Vorteile, die beide später noch näher beschrieben werden.

Um Luftspalteinflüsse und andere Störungen zu minimieren, kann eine weitere Lesespur mit einer zur ersten Lesespur invertierten Magnetisierung aufgebracht werden. Aus diesen beiden Lesespuren kann ein Differenzsignal gebildet werden, dass unempfindlicher gegenüber Luftspaltänderungen ist und zusätzlich, bei nichtkontinuierlicher Magnetisierung, eine feinere Quantisierung der Magnetisierung zulässt.

Reicht diese Auflösung nicht, so kann eine dritte Lesespur auf das Geberrad aufgebracht werden. Diese Lesespur wird abwechselnd mit Nord- und Südpolen magnetisiert um die typischen Zahn-Lücken-Paare zu generieren. Diese dritte Lesespur kann nicht zur Auflösung des Absolutwinkels bei stillstehendem Motor beitragen. Bei rotierender Nockenwelle können aber so Signale generiert werden, die das Signal aus der ersten Lesespur oder die Signale der ersten und zweiten Lesespur zusätzlich unterteilen. Vor allem bei einer quantisierten Magnetisierung der ersten Lesespur oder der ersten und zweiten Lesespur kann so eine höhere Auflösung im Betrieb erreicht werden.

Zur Abtastung der Lesespuren werden Hall-Platten verwendet. Aus den Signalen der ersten Lesespur oder der ersten und zweiten Lesespur wird ein pulsweitenmoduliertes Signal erzeugt (Duty-Cycle, kurz DC). Wenn vorhanden, wird aus der dritten Lesespur ein typisches Rechtecksignal erzeugt. Die Kombination dieser Signale erlaubt eine hochauflösende Erfassung der Nockenwellenstellung. Die Erfindung kann allein mit der ersten Lesespur und einem DC-Signal, mit der ersten und zweiten Lesespur und einem Differenz-DC-Signal oder mit der ersten bis dritten Lesespur und dem kombinierten Signal umgesetzt werden. Mit Hilfe des DC-Signals können zusätzlich Diagnosefunktionen implementiert werden, indem der gültige Signalbereich zwischen 10 % bis 90 % liegt. Ein Signal unterhalb oder oberhalb dieser Werte kann zur Diagnose genutzt werden. Frequenz und Signallänge des DC-Signals sowie die Anordnung der Lesespuren, der Magnetfeldstärken und die Größe der Quantisierungsschritte für die erste und zweite Lesespur müssen in weiteren Entwicklungsschritten für eine bestmögliche Performance optimiert werden.

Ob eine kontinuierliche oder quantisierte Magnetisierung vorzuziehen ist, hängt von den jeweiligen Anforderungen ab. Vorteile einer kontinuierlichen Magnetisierung der ersten und zweiten Lesespur sind zum einen, dass mit Hilfe eines Algorithmus aus der Spannweite von maximalem Nordpol und maximalem Südpol der gültige Signalbereich detektiert werden und anschließend mit Hilfe desselben Algorithmus' die Quantisierung der DC-Kennlinie vorgenommen werden kann. Zum anderen kann der Algorithmus bei jeder vollen Umdrehung die Spannweite der Magnetfeldstärke überprüfen. Bei einem Trend kann die Quantisierung der DC-Kennlinie aktualisiert und somit auf Veränderungen der Spannweite reagiert werden. Somit können Umweltänderungen wie Luftspaltänderungen, Temperaturänderungen etc. ausgeglichen werden. Nachteilig an der kontinuierlichen Magnetisierung ist, dass bei Einschalten des Sensors nicht sofort ein Winkel abgelesen werden kann, sondern nur eine Aussage getroffen werden kann, ob man sich auf den 180° des Nordpols oder des Südpols befindet. Im schlimmsten Fall kann es eine komplette Nockenwellenumdrehung dauern, bis der maximale Nordpol und der maximale Südpol einmal detektiert wurden und somit ein DC-Signal berechnet werden kann.

Diese Betrachtungen beziehen sich auf Messungen, die auf Basis des Hall-Effekts durchgeführt wurden. Prinzipiell können auch XMR-basierte Messprinzipien (X-MagnetoResistiv) genutzt werden. Entsprechend muss die Magnetisierung der Lesespuren angepasst werden. Ebenfalls denkbar wäre eine Lösung mit einem 3D-Hall-Sensor.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: einen prinzipiellen Aufbau eines Sensors zur Bestimmung mindestens einer Rotationseigenschaft eines rotierenden Elements,
- Figur 2: ein Diagramm zur Veranschaulichung des Zusammenhangs zwischen magnetischer Feldstärke bzw. Magnetisierung und dem Winkel des rotierenden Elements,
- Figur 3: einen Aufbau eines weiteren Sensors zur Bestimmung mindestens einer Rotationseigenschaft eines rotierenden Elements,
- Figur 4: ein Diagramm zur Veranschaulichung des Zusammenhangs zwischen magnetischer Feldstärke bzw. Magnetisierung und dem Winkel des rotierenden Elements,
- Figur 5: ein Diagramm zur Veranschaulichung des Zusammenhangs zwischen magnetischer Feldstärke bzw. Magnetisierung und dem Winkel des rotierenden Elements,
- Figur 6: ein Diagramm zur Veranschaulichung des Zusammenhangs zwischen magnetischer Feldstärke bzw. Magnetisierung und dem Winkel des rotierenden Elements,
- Figur 7: ein Diagramm zur Veranschaulichung der Gesamtkombination der Ausgabesignale bestehend aus Pulsweitenmoduliertem- und Inkrementiertem-Signal und
- Figur 8: ein Diagramm zur Veranschaulichung des Zusammenhangs zwischen magnetischer Feldstärke bzw. Magnetisierung und dem Winkel des rotierenden Elements.

### Ausführungsformen der Erfindung

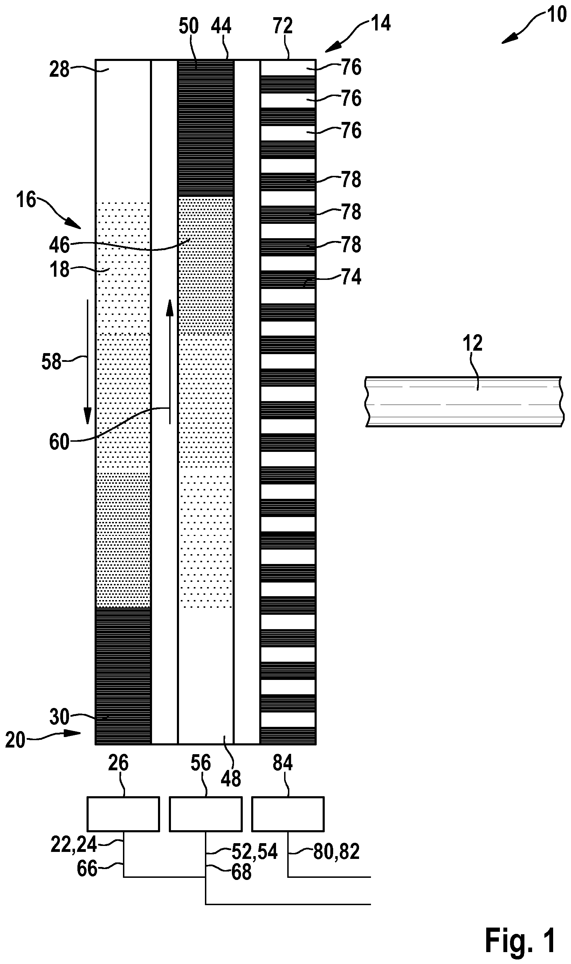

Figur 1 zeigt den Aufbau eines Sensors 10 zur Bestimmung mindestens einer Rotationseigenschaft eines rotierenden Elements 12. Das rotierende Element 12 ist beispielsweise eine Nockenwelle eines Verbrennungsmotors. Der Sensor 10 weist ein mit dem rotierenden Element 12 verbindbares Geberrad 14 auf. Das Geberrad 14 weist mindestens eine erste Lesespur 16 auf. Die erste Lesespur 16 weist eine erste Mehrzahl von magnetischen Ereignisgebern 18 auf. Die erste Lesespur 16 ist auf dem Geberrad 14 derart angeordnet, dass sich die erste Lesespur 16 über einen vollständigen Umfang 20 des Geberrads 14 erstreckt. Mit anderen Worten deckt die erste Lesespur 16 einen vollständigen Umfang oder 360° des Geberrads 14 ab.

Der Sensor 10 weist weiterhin mindestens einen ersten Magnetsensor 22 auf. Der erste Magnetsensor 22 ist ein erster Hall-Sensor 24 und umfasst mindestens ein erstes Hall-Element 26 in Form von beispielsweise einer Hall-Platte. Die erste Lesespur 16 ist dabei so ausgebildet, dass sich über den vollständigen Umfang 20 des Geberrads 14 eine magnetische Feldstärke der ersten Mehrzahl von Ereignisgebern 18 schrittweise von einem ersten maximalen Nordpol 28 zu einem ersten maximalen Südpol 30 ändert. Die erste Lesespur 16 ist insbesondere so ausgebildet, dass sich über den vollständigen Umfang 20 des Geberrads 14 die magnetische Feldstärke der ersten Mehrzahl von Ereignisgebern kontinuierlich von dem ersten maximalen Nordpol 28 zu dem ersten maximalen Südpol 30 ändert. Mit anderen Worten ist die schrittweise Änderung der magnetischen Feldstärke unendlich klein.

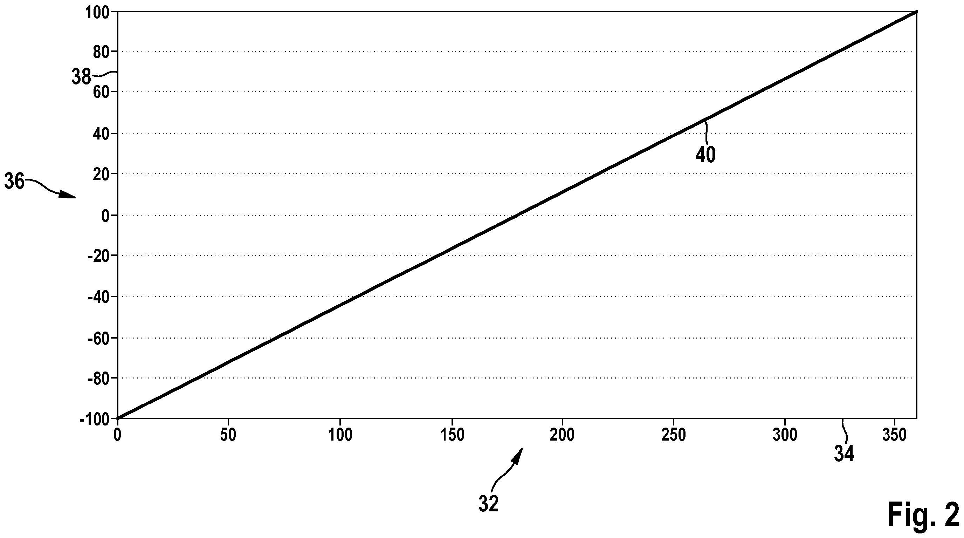

Figur 2 zeigt den Zusammenhang zwischen einem Winkel 32, insbesondere einem Absolutwinkel des rotierenden Elements 12, der auf der X-Achse 34 aufgetragen ist, und der magnetischen Feldstärke der ersten Mehrzahl von Ereignisgebern 18 bzw. dem Grad der Magnetisierung 36 der ersten Lesespur 16 beispielhaft ausgedrückt in Prozent, die auf der Y-Achse 38 aufgetragen ist. Die Kurve 40 gibt dabei die Magnetisierung in Abhängigkeit von dem Winkel 32 an. So ist beispielsweise dem maximalen Nordpol 28 eine Magnetisierung von 100 % zugeordnet und dem maximalen Südpol 30 eine Magnetisierung von -100 %. Zu erkennen ist weiter, dass dem maximalen Südpol 30 ein absoluter Winkel 32 von 0° und dem maximalen Nordpol 28 ein absoluter Winkel 32 von 360° zugeordnet ist. Des Weiteren ist zu erkennen, dass von dem maximalen Nordpol 28 die magnetische Feldstärke Schritt für Schritt gesenkt wird. Die Schritte sind dabei so klein gewählt, dass sich die Magnetisierung gemäß der Kurve 40 linear mit dem Winkel 32 ändert. Bei einer Magnetisierung von 0 % bzw. 0 mT als magnetische Feldstärke erfolgt der Wechsel auf Südpol. Jetzt wird wiederum die Feldstärke Schritt für Schritt bis zu dem maximalen Südpol 30 angehoben. Dementsprechend liegen maximaler Südpol 30 und maximaler Nordpol 28 nebeneinander. Des Weiteren ist zu erkennen, dass dieses "Ummagnetisieren" kontinuierlich erfolgt.

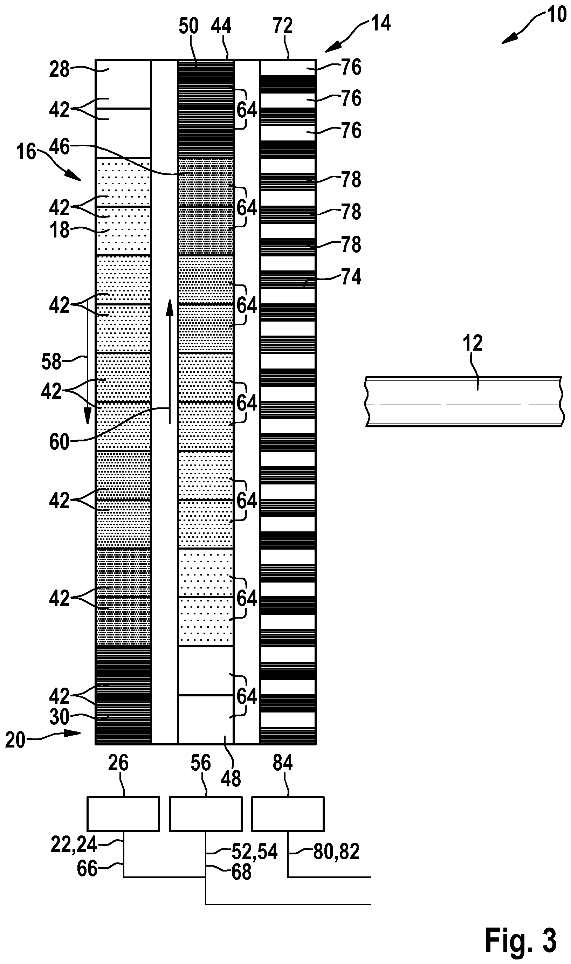

Figur 3 zeigt den Aufbau eines weiteren Sensors 10 zur Bestimmung mindestens einer Rotationseigenschaft eines rotierenden Elements 12. Nachstehend werden lediglich die Unterschiede zu der vorhergehenden Ausführungsform beschrieben und gleiche Bauteile sind mit gleichen Bezugszeichen versehen. Zu erkennen ist, dass bei dem Sensor 10 der Figur 3 die Änderung der magnetischen Feldstärke der ersten Mehrzahl von magnetischen Ereignisgebern 18 der ersten Lesespur 16 in gleichgroßen Schritten 42 erfolgt.

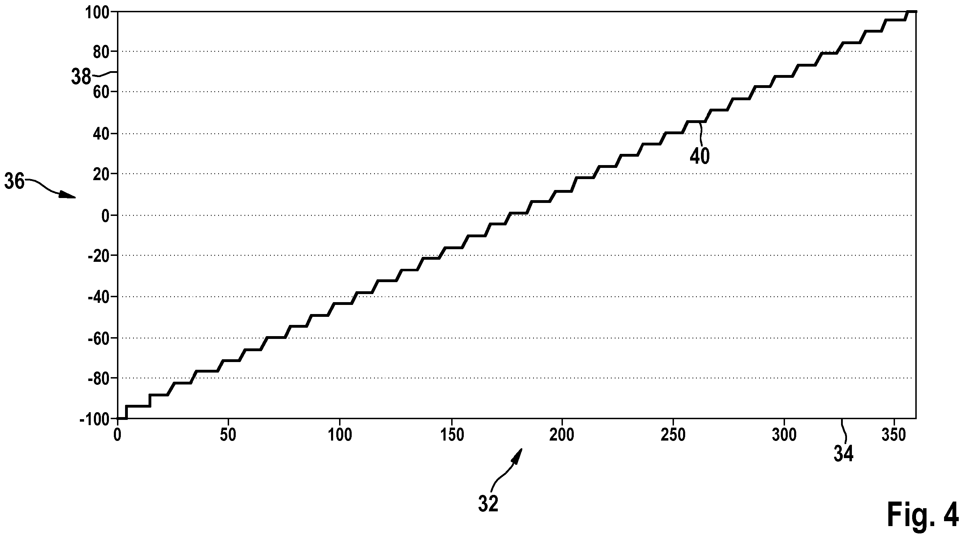

Figur 4 zeigt den entsprechenden Zusammenhang zwischen dem Winkel 32 und der Magnetisierung 36. Zu erkennen ist, dass die Ummagnetisierung bedingt durch die Schritte 42 quantisiert erfolgt.

Unter Verweis auf Figur 1 ist der Sensor 10 so ausgebildet, dass das Geberrad 14 optional eine zweite Lesespur 44 mit einer zweiten Mehrzahl von magnetischen Ereignisgebern 46 aufweist. Die zweite Lesespur 44 ist dabei so ausgebildet, dass sich über den vollständigen Umfang 20 des Geberrads 14 eine magnetische Feldstärke der zweiten Mehrzahl von magnetischen Ereignisgebern 46 schrittweise von einem zweiten maximalen Nordpol 48 zu einem zweiten maximalen Südpol 50 ändert. Der Sensor 10 umfasst weiterhin einen zweiten Magnetsensor 52 zur Erfassung von durch die zweite Mehrzahl von magnetischen Ereignisgebern 46 erzeugten magnetischen Ereignissen. Der zweite Magnetsensor 52 kann ein zweiter Hall-Sensor 54 sein. Entsprechend weist der zweite Magnetsensor 52 bzw. der zweite Hall-Sensor 54 ein zweites Hall-Element 56 in Form beispielsweise einer "Hall-Platte" auf. Die Hall-Elemente 26, 56 können auch in einem einzigen Magnetsensor zusammengefasst sein.

In Figur 1 ist weiter zu erkennen, dass sich die magnetische Feldstärke der ersten Mehrzahl von magnetischen Ereignisgebern 18 in einer ersten Richtung 58 ändert. Die magnetische Feldstärke der zweiten Mehrzahl von magnetischen Ereignisgebern 46 ändert sich in einer zweiten Richtung 60. Die zweite Richtung 60 ist der ersten Richtung 58 entgegengesetzt.

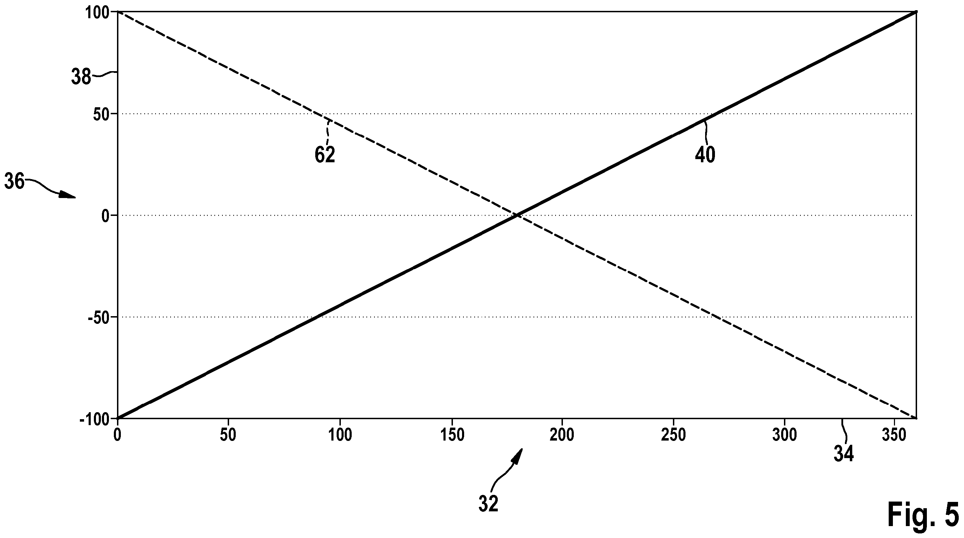

Figur 5 zeigt den Zusammenhang zwischen Winkel 32 und Magnetisierung 36 bei Vorliegen von zwei Lesespuren 16, 44 in der beschriebenen Weise an dem Geberrad 14. Die Kurve 62 gibt dabei die Magnetisierung der zweiten Lesespur 44 an. Zu erkennen ist, dass die Kurve 40 der ersten Lesespur 16 und die Kurve 62 der zweiten Lesespur 44 entgegengesetzt verlaufen, da sich die magnetische Feldstärke der zweiten Mehrzahl von magnetischen Ereignisgebern 46 in entgegengesetzter Richtung zu der magnetischen Feldstärke der ersten Mehrzahl von magnetischen Ereignisgebern 18 ändert. Dies dient zur Minimierung von Luftspalteinflüssen und anderen Störungen.

Unter Bezugnahme auf Figur 3 wird eine weitere Modifikation des dort gezeigten Sensors beschrieben. Analog der Darstellung der Figur 1 wird auch die zweite Lesespur 44 in ihrer magnetischen Feldstärke schrittweise geändert, beispielsweise mit gleichgroßen Schritten 64.

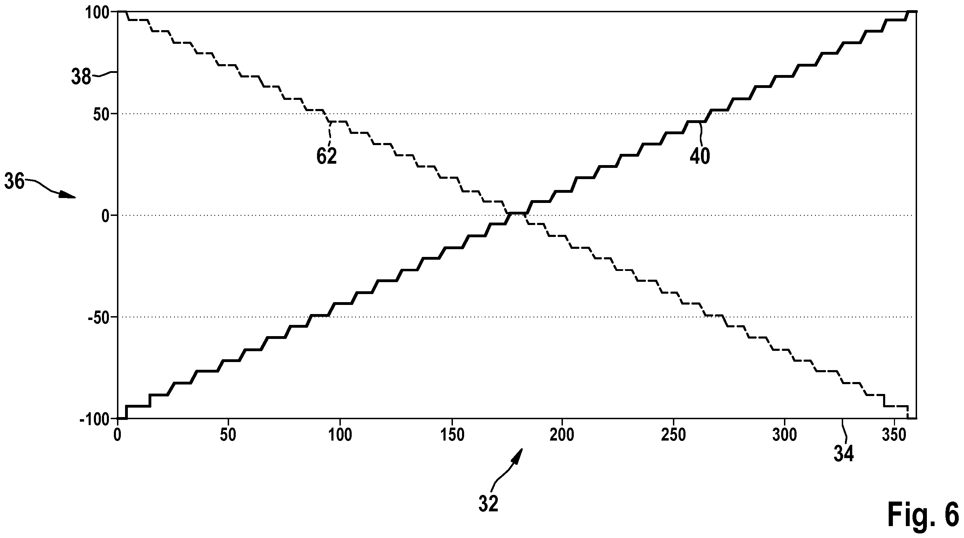

Figur 6 zeigt den entsprechenden Zusammenhang zwischen Winkel 32 und Magnetisierung 36 anhand der Kurven 40 und 62. Zu erkennen ist die schrittweise Änderung der Magnetisierung bedingt durch die Schritte 42, 64 in quantisierter Form.

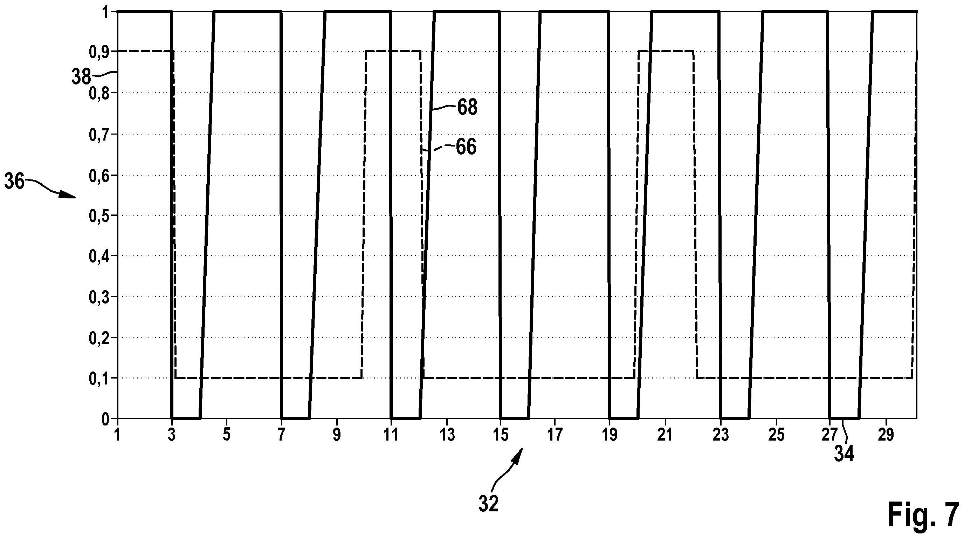

Figur 7 zeigt ein Diagramm zur Veranschaulichung der Gesamtkombination der Ausgabesignale bestehend aus Pulsweitenmoduliertem- und Inkrementiertem-Signal. Wie in Figur 7 dargestellt, kann der erste Magnetsensor 22, oder das interne Differenzsignal aus Magnetsensor 22 minus Magnetsensor 52 zum Ausgeben eines ersten Signals 66 ausgebildet sein. Der dritte Magnetsensor 82 kann zum Ausgeben eines zweiten Signals 68 ausgebildet sein. Die Bestimmung der Rotationseigenschaft des rotierenden Elements 12 kann aus dem ersten Signal 66, oder der Kombination aus dem ersten Signal 66 und dem zweiten Signal 68 erfolgen.

Figur 7 zeigt eine weitere Modifikation der in Figur 1 und Figur 3 beschriebenen Sensoren. So kann das erste Signal 66 ein pulsweitenmoduliertes Signal sein. Das zweite Signal 68 kann auch ein pulsweitenmoduliertes Signal sein, dass über 1-2 feste Pulsweiten verfügt. Die zweite Pulsweite kann für eine Drehrichtungserkennung verwendet werden. Dabei wird beispielsweise mit einer Tastrate bzw. einem so genannten Duty-Cycle in Abhängigkeit der Magnetfeldstärke, im Beispiel 20%, das erste Signal 66 bzw. das zweite Signal 68 in Abhängigkeit der Drehrichtung pulsweitenmoduliert. Dies lässt eine weitere genauere Auflösung der absoluten Winkelposition zu. So ist auf der X-Achse 34 weiterhin der Winkel 32 aufgetragen und auf der Y-Achse 38 der zugehörige Signalwert 70, der sich zwischen 0 und 1 ändern kann.

Unter Bezugnahme auf Figur 1 und Figur 3 wird eine weitere Modifikation beschrieben. So kann das Geberrad 14 eine dritte Lesespur 72 aufweisen. Die dritte Lesespur 72 kann eine dritte Mehrzahl von magnetischen Ereignisgebern 74 aufweisen. Die dritte Lesespur 72 ist so ausgebildet, dass die dritte Mehrzahl von Ereignisgebern 74 mehrere Nordpole 76 und mehrere Südpole 78 aufweist, die über den vollständigen Umfang 20 des Geberrads 14 alternierend angeordnet sind. Entsprechendes gilt für den Sensor der Figur 3. Dabei kann ein dritter Magnetsensor 80 zur Erfassung von durch die dritte Mehrzahl von magnetischen Ereignisgebern 74 erzeugten magnetischen Ereignisse vorgesehen sein. Der dritte Magnetsensor 80 kann ebenfalls ein Hall-Sensor sein, insbesondere ein dritter Hall-Sensor 82, der ein Hall-Element 84 aufweist. Dargestellt ist auch die Verschaltung der Hall-Elemente 26, 56, 84. Die Hall-Elemente 26,56, 84 können auch in einem einzigen Magnetsensor zusammengefasst sein.

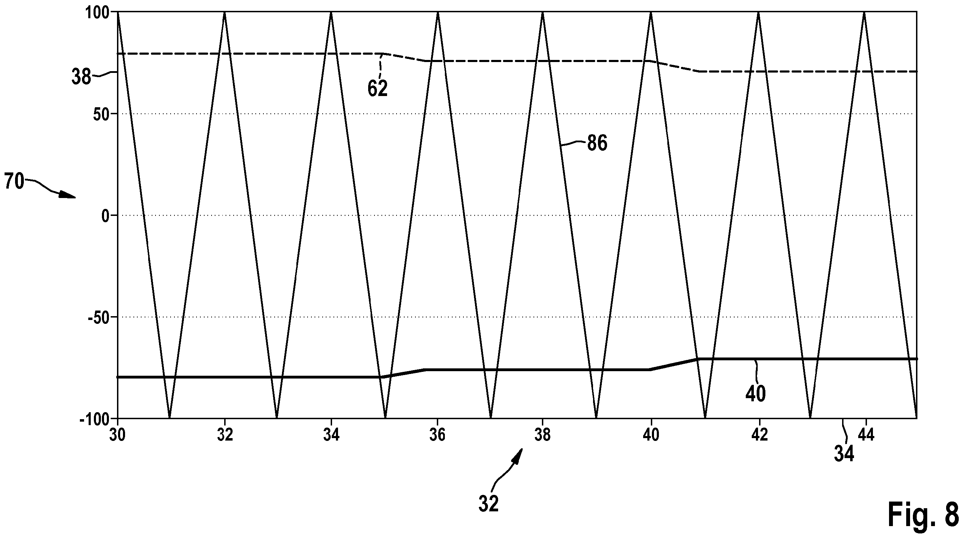

Figur 8 zeigt den Zusammenhang zwischen Winkel 32 und der Magnetisierung 36 mit der Kurve 40 als erstes Signal 66, der Kurve 62 als zweites Signal 68 und einer Kurve 86 als drittes Signal der dritten Lesespur 72. Die dritte Lesespur 72 dient zum weiteren Erhöhen der Auflösung. Die dritte Lesespur 72 ist entsprechend abwechselnd mit den Nordpolen 76 und den Südpolen 78 magnetisiert, um die typischen Zahn-Lücke-Paare eines üblichen Geberrads zu generieren. Die dritte Lesespur 72 kann dabei nicht zur Auflösung des Absolutwinkels bei stillstehendem Motor beitragen. Bei rotierender Nockenwelle können aber so Signale generiert werden, die das Signal der ersten Lesespur 16 und der zweiten Lesespur 44 zusätzlich unterteilen, wie in Figur 8 dargestellt ist. Vor allem bei einer quantisierten Magnetisierung der ersten Lesespur 16 oder der ersten Lesespur 16 und der zweiten Lesespur 44 kann so eine höhere Auflösung im Betrieb erreicht werden. Die Kombination dieser Signale erlaubt eine hochauflösende Erfassung der Nockenwellenstellung.

## Patentansprüche

1. Sensor (10) zur Bestimmung mindestens einer Rotationseigenschaft eines rotierenden Elements (12), umfassend ein mit dem rotierenden Element (12) verbindbares Geberrad (14) mit mindestens einer ersten Lesespur (16), wobei die Lesespur (16) eine erste Mehrzahl von magnetischen Ereignisgebern (18) aufweist, und mindestens einen ersten Magnetsensor (22) zur Erfassung von durch die erste Mehrzahl von magnetischen Ereignisgebern (18) erzeugten magnetischen Ereignissen,
wobei die erste Lesespur (16) so ausgebildet ist, dass sich über einen vollständigen Umfang (20) des Geberrads (14) eine magnetische Feldstärke der ersten Mehrzahl von Ereignisgebern (18) schrittweise von einem ersten maximalen Nordpol (28) zu einem ersten maximalen Südpol (30) ändert, **dadurch gekennzeichnet, dass**
das Geberrad (14) weiterhin eine zweite Lesespur (44) aufweist, wobei die zweite Lesespur (44) eine zweite Mehrzahl von magnetischen Ereignisgebern (46) aufweist, wobei die zweite Lesespur (44) so ausgebildet ist, dass sich über den vollständigen Umfang (20) des Geberrads (14) eine magnetische Feldstärke der zweiten Mehrzahl von Ereignisgebern (46) schrittweise von einem zweiten maximalen Nordpol (48) zu einem zweiten maximalen Südpol (50) ändert.

2. Sensor (10) nach dem vorhergehenden Anspruch, wobei die erste Lesespur (16) so ausgebildet ist, dass sich über den vollständigen Umfang (20) des Geberrads (14) die magnetische Feldstärke der ersten Mehrzahl von Ereignisgebern (18) kontinuierlich von dem ersten maximalen Nordpol (28) zu dem ersten maximalen Südpol (30) ändert.

3. Sensor (10) nach einem der vorhergehenden Ansprüche, wobei sich die magnetische Feldstärke der ersten Mehrzahl von Ereignisgebern (18) in einer ersten Richtung (58) ändert, wobei sich die magnetische Feldstärke der zweiten Mehrzahl von Ereignisgebern (46) in einer zweiten Richtung (60) ändert, wobei die zweite Richtung (60) der ersten Richtung (58) entgegengesetzt ist.

4. Sensor (10) nach einem der vorhergehenden Ansprüche, weiterhin umfassend einen zweiten Magnetsensor (52) zur Erfassung von durch die zweite Mehrzahl (46) von magnetischen Ereignisgebern erzeugten magnetischen Ereignissen.

5. Sensor (10) nach dem vorhergehenden Anspruch, wobei der erste Magnetsensor (22) zum Ausgeben eines ersten Signals (66) ausgebildet ist, oder ein Differenzsignal aus dem ersten Magnetsensor (22) und dem zweiten Magnetsensor (52) zum Ausgeben eines ersten Signals (66) ausgebildet ist.

6. Sensor (10) nach dem vorhergehenden Anspruch, wobei aus dem ersten Signal (66) und dem zweiten Signal (68) ein erstes pulsweitenmoduliertes Signal und ein zweites pulsweitenmoduliertes Signal erzeugbar ist.

7. Sensor (10) nach einem der vorhergehenden Ansprüche, wobei das Geberrad (14) weiterhin eine dritte Lesespur (72) aufweist, wobei die dritte Lesespur (72) eine dritte Mehrzahl von magnetischen Ereignisgebern (74) aufweist, wobei die dritte Lesespur (72) so ausgebildet ist, dass die dritte Mehrzahl von Ereignisgebern (74) mehrere Nordpole (76) und mehrere Südpole (78) aufweist, die über den vollständigen Umfang (20) des Geberrads (14) alternierend angeordnet sind.

8. Sensor (10) nach dem vorhergehenden Anspruch, weiterhin umfassend einen dritten Magnetsensor (80) zur Erfassung von durch die dritte Mehrzahl von magnetischen Ereignisgebern (74) erzeugten magnetischen Ereignissen.

9. Sensor (10) nach einem der vorhergehenden Ansprüche, wobei das rotierende Element (12) eine Nockenwelle ist, wobei die Rotationseigenschaft ein Absolutwinkel der Nockenwelle ist.

## Claims

1. Sensor (10) for determining at least one rotation characteristic of a rotating element (12), comprising a transmitter wheel (14) that can be connected to the rotating element (12) and has at least one first reading track (16), the reading track (16) having a first plurality of magnetic event transmitters (18), and at least one first magnetic sensor (22) for detecting magnetic events generated by the first multiplicity of magnetic event transmitters (18),
the first reading track (16) being formed in such a way that, over a complete circumference (20) of the transmitter wheel (14), a magnetic field strength of the first plurality of event transmitters (18) changes step by step from a first maximum north pole (28) to a first maximum south pole (30),
**characterized in that**
the transmitter wheel (14) also has a second reading track (44), wherein the second reading track (44) has a second plurality of magnetic event transmitters (46), wherein the second reading track (44) is formed in such a way that, over the complete circumference (20) of the transmitter wheel (14), a magnetic field strength of the second plurality of event transmitters (46) changes step by step from a second maximum north pole (48) to a second maximum south pole (50).

2. Sensor (10) according to the preceding claim, wherein the first reading track (16) is formed in such a way that, over the complete circumference (20) of the transmitter wheel (14) the magnetic field strength of the first plurality of event transmitters (18) changes continuously from the first maximum north pole (28) to the first maximum south pole (30).

3. Sensor (10) according to one of the preceding claims, wherein the magnetic field strength of the first plurality of event transmitters (18) changes in a first direction (58), wherein the magnetic field strength of the second plurality of event transmitters (46) changes in a second' direction (60), wherein the second direction (60) is opposite to the first direction (58).

4. Sensor (10) according to one of the preceding claims, also comprising a second magnetic sensor (52) for detecting magnetic events generated by the second plurality (46) of magnetic event transmitters.

5. Sensor (10) according to the preceding claim, wherein the first magnetic sensor (22) is designed to output a first signal (66) or a difference signal from the first magnetic sensor (22), and the second magnetic sensor (52) is designed to output a first signal (66).

6. Sensor (10) according to the preceding claim, wherein a first pulse width modulated signal and a second pulse width modulated signal can be generated from the first signal (66) and the second signal (68).

7. Sensor (10) according to one of the preceding claims, wherein the transmitter wheel (14) also has a third reading track (72), wherein the third reading track (72) has a third plurality of magnetic event transmitters (74), wherein the third reading track (72) is designed in such a way that the third plurality of event transmitters (74) has a plurality of north poles (76) and a plurality of south poles (78), which are arranged alternately over the complete circumference (20) of the transmitter wheel (14).

8. Sensor (10) according to the preceding claim, also comprising a third magnetic sensor (80) for detecting magnetic events generated by the third plurality of magnetic event transmitters (74).

9. Sensor (10) according to one of the preceding claims, wherein the rotating element (12) is a camshaft, wherein the rotation characteristic is an absolute angle of the camshaft.

## Revendications

1. Capteur (10) destiné à déterminer au moins une propriété de rotation d'un élément rotatif (12), comprenant une roue émettrice (14) apte à être reliée à l'élément rotatif (12) et présentant une première piste de lecture (16),
la première piste de lecture (16) présentant un premier nombre d'émetteurs (18) d'événements magnétiques et au moins un premier capteur magnétique (22) qui capte les événements magnétiques formés par le premier nombre d'émetteurs (18) d'événements magnétiques,
la première piste de lecture (16) étant configurée de telle sorte que l'intensité du champ magnétique du premier nombre d'émetteurs (18) d'événements magnétiques varie pas-à-pas sur la totalité de la périphérie (20) de la roue émettrice (14) depuis un premier pôle nord maximum (28) jusqu'à un premier pôle sud maximum (30),
**caractérisé en ce que**
la roue émettrice (14) présente en outre une deuxième piste de lecture (44), la deuxième piste de lecture (44) présentant un deuxième nombre d'émetteurs (46) d'événements magnétiques, la deuxième piste de lecture (44) étant configurée de telle sorte que l'intensité du champ magnétique du deuxième nombre d'émetteurs (46) d'événements magnétiques varie pas-à-pas sur la totalité de la périphérie (20) de la roue émettrice (14) depuis un deuxième pôle nord maximum (48) jusqu'à un deuxième pôle sud maximum (50).

2. Capteur (10) selon la revendication précédente, dans lequel la première piste de lecture (16) est configurée de telle sorte que l'intensité du champ magnétique du premier nombre d'émetteurs (18) d'événements magnétiques varie en continu sur la totalité de la périphérie (20) de la roue émettrice (14) depuis un premier pôle nord maximum (28) jusqu'à un premier pôle sud maximum (30).

3. Capteur (10) selon l'une des revendications précédentes, dans lequel l'intensité du champ magnétique du premier nombre d'émetteurs (18) d'événements magnétiques varie dans une première direction (58) et l'intensité du champ magnétique du deuxième nombre d'émetteurs (46) d'événements magnétiques varie dans une deuxième direction, la deuxième direction (60) étant opposée à la première direction (58).

4. Capteur (10) selon l'une des revendications précédentes, dans lequel un deuxième capteur magnétique (52) qui saisit les événements magnétiques formés par le deuxième nombre (46) d'émetteurs d'événements magnétiques.

5. Capteur (10) selon la revendication précédente, dans lequel le premier capteur magnétique (22) est configuré pour émettre un premier signal (66) ou un signal de différence entre le premier capteur magnétique (22) et le deuxième capteur magnétique (52) pour émettre un premier signal (66).

6. Capteur (10) selon la revendication précédente, dans lequel un premier signal d'impulsions modulées en largeur et un deuxième signal d'impulsions modulées en largeur peut être formé à partir du premier signal (66) et du deuxième signal (68).

7. Capteur (10) selon l'une des revendications précédentes, dans lequel la roue émettrice (14) présente en outre une troisième piste de lecture (72), la troisième piste de lecture (72) présentant un troisième nombre d'émetteurs (74) d'événements magnétiques, la troisième piste de lecture (72) étant configurée de telle sorte que le troisième nombre d'émetteurs (74) d'événements magnétiques présente plusieurs pôles nord (76) et plusieurs pôles sud (78) disposés en alternance autour de la totalité de la périphérie (20) de la roue émettrice (14).

8. Capteur (10) selon la revendication précédente, comprenant en outre un troisième capteur magnétique (80) qui saisit les événements magnétiques formés par le troisième nombre d'émetteurs (74) d'événements magnétiques.

9. Capteur (10) selon l'une des revendications précédentes, dans lequel l'élément rotatif (12) est un arbre à cames, la propriété de rotation étant l'angle absolu de l'arbre à cames.
